# EUROPEAN PATENT APPLICATION

(11) **EP 4 432 302 A1**
(43) Date of publication of application: **18.09.2024**
(21) Application number: 22894078.9
(22) Date of filing: 13.01.2022
(51) Int. Cl.: G21C 17/00, G21C 17/108

(54) **ONLINE PROTECTION METHOD AND SYSTEM**

(30) Priority: 18.11.2021 CN 202111372535
(71) Applicant: China Nuclear Power Technology Research Institute Co., Ltd, Shenzhen, Guangdong 518031 (CN); China General Nuclear Power Corporation, Shenzhen, Guangdong 518028 (CN); CGN Power Co., Ltd., Shenzen, Guangdong 518028 (CN); China Nuclear Power Engineering Co., Ltd., Shenzhen, Guangdong 518124 (CN)
(72) Inventor: LU, Xianghui, Shenzhen, Guangdong 518031 (CN); HU, Yisong, Shenzhen, Guangdong 518031 (CN); FENG, Yingjie, Shenzhen, Guangdong 518031 (CN); ZHANG, Yijun, Shenzhen, Guangdong 518031 (CN); WANG, Weiru, Shenzhen, Guangdong 518031 (CN); HU, Yousen, Shenzhen, Guangdong 518031 (CN); LI, Kejia, Shenzhen, Guangdong 518031 (CN); HE, Mingtao, Shenzhen, Guangdong 518031 (CN); HUANG, Yu, Shenzhen, Guangdong 518031 (CN); WU, Yuting, Shenzhen, Guangdong 518031 (CN); CHEN, Tianming, Shenzhen, Guangdong 518031 (CN); MAO, Yulong, Shenzhen, Guangdong 518031 (CN); ZHANG, Wei, Shenzhen, Guangdong 518031 (CN); PENG, Sitao, Shenzhen, Guangdong 518031 (CN); CHENG, Yanhua, Shenzhen, Guangdong 518031 (CN)
(74) Representative: Westphal, Mussgnug & Partner, Patentanwälte mbB
(86) International application number: PCT/CN2022/071875
(87) International publication number: WO 2023/087529

(57) **Abstract**

An online protection method and system. The online protection method comprises: obtaining calibration state data that is periodically updated (S10); performing reconstruction calculation on reactor core power distribution data corresponding to the total rod positions of control rods (S20); obtaining the current total rod position of each control rod in real time, and selecting a group of reactor core power distribution data from a plurality of groups of reactor core power distribution data as the current reactor core power distribution data (S30); calculating a maximum LPD value and a minimum DNBR value corresponding to the current total rod position of the control rod (S40); and according to the calculated maximum LPD value, the calculated minimum DNBR value, a preset LPD setting value, and a preset DNBR setting value, determining whether to trigger a reactor shutdown signal (S50).

## Description

### TECHNICAL FIELD

The present invention relates to the field of nuclear power design, particularly to an online protection method and system.

### BACKGROUND

To ensure the safety of reactors, it is required in the design that the maximum heat flux density on the fuel assembly surface is less than the critical heat flux density, introducing the Departure from Nucleate Boiling Ratio (DNBR) protection. Meanwhile, to avoid excessive core linear power density, Linear Power Density (LPD) protection is introduced.

In addition to being related to main pump speed, coolant temperature, and coolant pressure, DNBR and LPD calculations are also related to core power distribution data. Moreover, monitoring core power distribution is crucial for the safe operation of reactors. Currently, pressurized water reactors generally detect the neutron flux in the core through neutron detectors and periodically calculate the core power distribution combined with monitoring data from external nuclear instruments. However, this method lacks sufficient accuracy in calculation and has a slow response time, thus failing to achieve effective LPD and DNBR protection functions.

### SUMMARY OF THE INVENTION

### TECHNICAL PROBLEM

The technical problem to be solved by the present invention is the low calculation accuracy and slow response time in the existing technology.

### SOLUTION TO THE PROBLEM

### TECHNICAL SOLUTION

The technical solution adopted by the present invention to solve the technical problem is to construct an online protection method for reactor LPD and DNBR protection, comprising:
S10. acquiring periodically updated calibration state data, wherein the calibration state data includes multiple sets of calibration state core parameter data corresponding to multiple different total rod positions of control rods, respectively;
S20. reconstructing and calculating the core power distribution data corresponding to total rod position of each control rod based on the calibration state core parameter data corresponding to total rod position of each control rod;
S30. acquiring the current total rod positions of control rods in real-time, and selecting one set of core power distribution data from multiple sets of core power distribution data as the current core power distribution data based on the current total rod positions of control rods;
S40. calculating the LPD maximum value and the DNBR minimum value corresponding to the current total rod positions of control rods based on the current core power distribution data;
S50. determining whether to trigger a reactor shutdown signal based on the calculated LPD maximum value and DNBR minimum value, and preset LPD setting value and DNBR setting value.

Preferably, in step S30, the current core power distribution data is acquired as follows:
subtracting the multiple total rod positions of control rods in the calibration state data from the current total rod positions of control rods respectively, and selecting the set of core power distribution data corresponding to the total rod position of control rod with the smallest positive difference as the current core power distribution data.

Preferably, step S50 includes:
determining whether the calculated LPD maximum value is greater than the preset LPD setting value;
determining whether the calculated DNBR minimum value is less than the preset DNBR setting value;
triggering a reactor shutdown signal if the LPD maximum value is greater than the LPD setting value or the DNBR minimum value is less than the DNBR setting value.

Preferably, in step S10, the calibration state data is acquired as follows:
acquiring calibration state data based on a pre-established three-dimensional model.

Preferably, in step S10, the calibration state data is acquired as follows:
acquiring calibration state data through experiments.

Preferably, in step S10, the calibration state data is acquired as follows:
detecting the neutron flux in the core by multiple neutron detectors set up in the reactor during operation of the reactor at various calibration states.

The present invention also constructs an online protection system for reactor LPD and DNBR protection, comprising:
an acquisition module, which is configured for acquiring periodically updated calibration state data, wherein the calibration state data includes multiple sets of calibration state core parameter data corresponding to multiple different total rod positions of control rods, respectively;
a power reconstruction module, which is configured for reconstructing and calculating the core power distribution data corresponding to total rod position of each control rod based on the calibration state core parameter data corresponding to total rod position of each control rod;
a determination module, which is configured for acquiring the current total rod positions of control rods in real-time, and selecting one set of core power distribution data from multiple sets of core power distribution data as the current core power distribution data based on the current total rod positions of control rods;
a calculation module, which is configured for calculating the LPD maximum value and the DNBR minimum value corresponding to the current total rod positions of control rods based on the current core power distribution data;
a judgment module, which is configured for determining whether to trigger a reactor shutdown signal based on the calculated LPD maximum value and DNBR minimum value, and preset LPD setting value and DNBR setting value.

Preferably, the determination module, which is configured for subtracting the multiple total rod positions of control rods in the calibration state data from the current total rod positions of control rods respectively, and selecting the set of core power distribution data corresponding to the total rod position of control rod with the smallest positive difference as the current core power distribution data.

Preferably, the judgment module comprises:
a first judgment subunit, which is configured for determining whether the calculated LPD maximum value is greater than the preset LPD setting value;
a second judgment subunit, which is configured for determining whether the calculated DNBR minimum value is less than the preset DNBR setting value;
a shutdown triggering unit, which is configured for triggering a reactor shutdown signal when the LPD maximum value is greater than the LPD setting value or the DNBR minimum value is less than the DNBR setting value.

Preferably, the acquisition module, which is configured for acquiring calibration state data by periodically performing three-dimensional simulations or experiments of the reactor at various calibration states.

### BENEFICIAL EFFECTS OF THE INVENTION

### BENEFICIAL EFFECTS

In the technical solution provided by the present invention, after acquiring periodically updated calibration state data (multiple sets of calibration state core parameter data corresponding to multiple different total rod positions of control rods), different full-core power distributions are reconstructed segment by segment based on different total rod positions of control rods. Then, based on the real-time total rod position on-site, a set of full-core power distribution data is selected from multiple sets of full-core power distribution data, enabling real-time determination of the LPD maximum value and the minimum DNBR value. This method not only reduces calculation uncertainty but also improves the response speed of protection.

### BRIEF DESCRIPTION OF THE DRAWINGS

Figure 1 is a flowchart of an embodiment of the online protection method of the present invention.
Figure 2 is a logical structure diagram of an embodiment of the online protection system of the present invention.

### PREFERRED EMBODIMENT FOR IMPLEMENTING THE INVENTION

### PREFERRED EMBODIMENT OF THE INVENTION

The present invention will be described clearly and completely below in conjunction with the accompanying drawings of embodiments of the present invention. Obviously, the described embodiments are only part of the embodiments of the present invention, not all embodiments. Based on the embodiments of the present invention, all other embodiments obtained by those skilled in the art without creative labor are within the scope of protection of the present invention.

Firstly, it should be noted that control rod, as a tool for rapid control reactivity, can adjust the reactor power during normal operation and rapidly introduce negative reactivity in accident conditions to shut down the reactor quickly. Experiments have shown that the total rod position of control rod also affects the power distribution of the reactor. Based on this, in the technical solution of this application, different full-core power distributions are first reconstructed segment by segment based on different total step numbers of control rod insertion, and then a segmentally reconstructed full-core power distribution is selected based on the current total rod position on-site. Then, LPD and DNBR values are determined in the real-time on site, which can reduce calculation uncertainty and improve the response speed of protection, acquiring more safety margin.

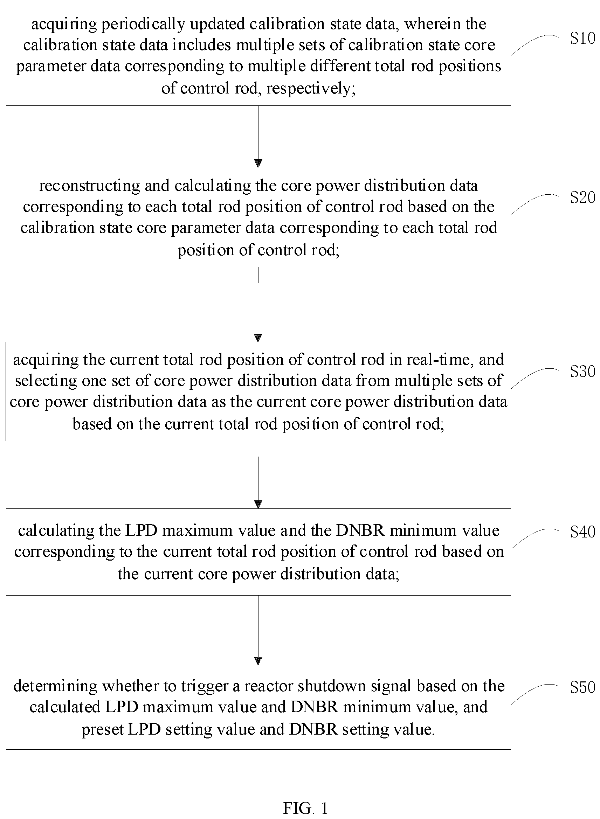

Figure 1 is a flowchart of an embodiment of the online protection method of the present invention, which is used for LPD and DNBR protection of a reactor, and includes the following steps:
step S10. acquiring periodically updated calibration state data, wherein the calibration state data includes multiple sets of calibration state core parameter data corresponding to multiple different total rod positions of control rods, respectively.

In this step, core parameter data refers to extrapolation coefficient matrices used for power reconstruction calculation, and using these extrapolation coefficient matrices, the power of each fuel assembly in the entire core can be reconstructed based on real-time signals acquired from multiple detectors (SPND). For example, in a 177-core reactor, there are 42 detectors, each with 7 measurement points axially, so with the corresponding extrapolation coefficient matrix, the three-dimensional power distribution of the 177-core can be reconstructed based on 42*7 detection signals. Additionally, there are multiple sets of calibration state data, each corresponding to different total rod positions, for example, calibration state core parameter data at total rod position R1; calibration state core parameter data at total rod position R2; calibration state core parameter data at total rod position R3; calibration state core parameter data at total rod position R4. It should be understood that the more groups of core parameter data there are, the more accurate the calculation will be, but it also increases the computational load. Therefore, engineering trade-offs are generally made, such as acquiring three groups of calibration state core parameter data corresponding to three total rod positions.

Regarding the method of acquiring calibration state data, in a specific example, calibration state data is acquired based on a pre-established three-dimensional model. Specifically, the theoretical state data of the core under calibration conditions is acquired by calculating the theoretical physics library of the reactor core using three-dimensional physics software, i.e., calibration state data acquired by three-dimensional theoretical calculations. In another specific example, calibration state data is acquired through experiments. When the operation of the reactor at various calibration states, multiple neutron detectors set up in the reactor core are used to detect the neutron flux in the core, and the core flux distribution is calculated based on the core neutron flux. Specifically, during reactor startup tests, the control rod and other states of the core are adjusted to rod positions of calibration state, and the data acquired at this time is the calibration state data of the test.

Additionally, it should be noted that calibration state data can be generated or updated by the upper computer (non-safety-grade equipment) and then periodically transmitted to the lower computer (safety-grade equipment), i.e., the lower computer acquires periodically updated calibration state data from the upper computer and then executes steps S20 to S50.

Step S20. reconstructing and calculating the core power distribution data corresponding to total rod position of each control rod based on the calibration state core parameter data corresponding to total rod position of each control rod.

In this step, when reconstructing core power distribution data, weighting coefficient method, coupling coefficient method, or harmonic synthesis method can be used. Different full-core power distribution data is reconstructed based on the calibration state core parameter data corresponding to different total rod positions. For example, full-core power distribution corresponding to total rod position R1 is reconstructed based on calibration state core parameter data at total rod position R1; full-core power distribution corresponding to total rod position R2 is reconstructed based on calibration state core parameter data at total rod position R2; full-core power distribution corresponding to total rod position R3 is reconstructed based on calibration state core parameter data at total rod position R3; full-core power distribution corresponding to total rod position R4 is reconstructed based on calibration state core parameter data at total rod position R4.

Step S30. acquiring the current total rod positions of control rods in real-time, and selecting one set of core power distribution data from multiple sets of core power distribution data as the current core power distribution data based on the current total rod positions of control rods.

In this step, the rod position measurement signals of each rod can be acquired from the measurement mechanism to acquire the current total rod position. After acquiring the current total rod position, one set of core power distribution data is selected from multiple sets of core power distribution data based on the current total rod position and used as the current core power distribution data.

Step S40. calculating the LPD maximum value and the DNBR minimum value corresponding to the current total rod positions of control rods based on the current core power distribution data.

In this step, after determining the current core power distribution data, the LPD values and DNBR values of each fuel assembly at each node can be calculated using the current core power distribution data. It should be understood that the calculation methods for LPD and DNBR are conventional methods and are not described here. Then, the LPD maximum value is determined from the calculated multiple LPD values, and the DNBR minimum value is determined from the calculated multiple DNBR values. For example, if there are 177 fuel assemblies in a core and each assembly has 44 nodes, then there will be 177*44 LPD values and 177*44 DNBR values.

Step S50. determining whether to trigger a reactor shutdown signal based on the calculated LPD maximum value and DNBR minimum value, and preset LPD setting value and DNBR setting value.

In this step, it should be noted that LPD setting value and DNBR setting value are preset based on accident analysis results.

Furthermore, in a specific embodiment, in step S30, the current core power distribution data can be determined as follows: subtracting the multiple total rod positions of control rods in the calibration state data from the current total rod positions of control rods respectively, and selecting the set of core power distribution data corresponding to the total rod position of control rod with the smallest positive difference as the current core power distribution data. For example, assume that at a certain moment, the current total rod position of core control rod is R. If 0≤R≤R1, the core power distribution data corresponding to the total rod position R1 is used to calculate the DNBR minimum value and LPD maximum value; if R1<R≤R2, the core power distribution data corresponding to the total rod position R2 is used to calculate the DNBR minimum value and LPD maximum value; if R2<R≤R3, the core power distribution data corresponding to the total rod position R3 is used to calculate the DNBR minimum value and LPD maximum value; if R3< R≤R4, the core power distribution data corresponding to the total rod position R4 is used to calculate the DNBR minimum value and LPD maximum value.

Furthermore, in a specific embodiment, step S50 includes:
determining whether the calculated LPD maximum value is greater than the preset LPD setting value;
determining whether the calculated DNBR minimum value is less than the preset DNBR setting value;
triggering a reactor shutdown signal if the LPD maximum value is greater than the LPD setting value or the DNBR minimum value is less than the DNBR setting value.

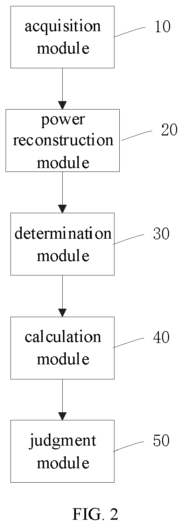

Figure 2 is a logical structure diagram of an embodiment of the online protection system of the present invention, which is used for LPD and DNBR protection of a reactor, and includes: an acquisition module 10, a power reconstruction module 20, a determination module 30, a calculation module 40, and a judgment module 50. Wherein, the acquisition module 10 is configured for acquiring periodically updated calibration state data, wherein the calibration state data includes multiple sets of calibration state core parameter data corresponding to multiple different total rod positions of control rods, respectively ; the power reconstruction module 20 is configured for reconstructing and calculating the core power distribution data corresponding to total rod position of each control rod based on the calibration state core parameter data corresponding to total rod position of each control rod; the determination module 30 is configured for acquiring the current total rod positions of control rods in real-time, and selecting one set of core power distribution data from multiple sets of core power distribution data as the current core power distribution data based on the current total rod positions of control rods; the calculation module 40 is configured for calculating the LPD maximum value and the DNBR minimum value corresponding to the current total rod positions of control rods based on the current core power distribution data; the judgment module 50 is configured for determining whether to trigger a reactor shutdown signal based on the calculated LPD maximum value and the DNBR minimum value, and preset LPD and DNBR setting values.

Furthermore, the acquisition module 10 is configured for acquiring calibration state data by periodically performing three-dimensional simulations or experiments of the reactor at various calibration states.

Furthermore, the determination module 30 is configured for subtracting the multiple total rod positions of control rods in the calibration state data from the current total rod positions of control rods respectively, and selecting the set of core power distribution data corresponding to the total rod position of control rod with the smallest positive difference as the current core power distribution data.

Furthermore, the judgment module 40 includes a first judgment subunit, a second judgment subunit, and a shutdown triggering unit, wherein, the first judgment subunit is configured for determining whether the calculated LPD maximum value is greater than the preset LPD setting value; the second judgment subunit is configured for determining whether the calculated DNBR minimum value is less than the preset DNBR setting value; the shutdown triggering unit is configured for triggering a reactor shutdown signal when the LPD maximum value is greater than the LPD setting value or the DNBR minimum value is less than the DNBR setting value.

The above-described embodiments are merely preferred embodiments of the present invention, and are not intended to limit the present invention. For those skilled in the art, various changes and modifications can be made without departing from the spirit and principles of the present invention. All such modifications and changes fall within the scope of the present invention.

## Claims

1. An online protection method for reactor LPD and DNBR protection, comprising:
S10. acquiring periodically updated calibration state data, wherein the calibration state data includes multiple sets of calibration state core parameter data corresponding to multiple different total rod positions of control rods, respectively;
S20. reconstructing and calculating the core power distribution data corresponding to total rod position of each control rod based on the calibration state core parameter data corresponding to total rod position of each control rod;
S30. acquiring the current total rod positions of control rods in real-time, and selecting one set of core power distribution data from multiple sets of core power distribution data as the current core power distribution data based on the current total rod positions of control rods;
S40. calculating the LPD maximum value and the DNBR minimum value corresponding to the current total rod positions of control rods based on the current core power distribution data;
S50. determining whether to trigger a reactor shutdown signal based on the calculated LPD maximum value and DNBR minimum value, and preset LPD setting value and DNBR setting value.

2. The online protection method based on claim 1, **characterized in that**, in step S30, the current core power distribution data is acquired as follows: subtracting the multiple total rod positions of control rods in the calibration state data from the current total rod positions of control rods respectively, and selecting the set of core power distribution data corresponding to the total rod position of control rod with the smallest positive difference as the current core power distribution data.

3. The online protection method based on claim 1, **characterized in that** step S50 comprises:
determining whether the calculated LPD maximum value is greater than the preset LPD setting value;
determining whether the calculated DNBR minimum value is less than the preset DNBR setting value;
triggering a reactor shutdown signal if the LPD maximum value is greater than the LPD setting value or the DNBR minimum value is less than the DNBR setting value.

4. The online protection method based on claim 1, **characterized in that**, in step S10, the calibration state data is acquired as follows:
acquiring calibration state data based on a pre-established three-dimensional model..

5. The online protection method based on claim 1, **characterized in that**, in step S10, the calibration state data is acquired as follows:
acquiring calibration state data through experiments.

6. The online protection method based on claim 5, **characterized in that**, in step S10, the calibration state data is acquired as follows:
detecting the neutron flux in the core by multiple neutron detectors set up in the reactor during operation of the reactor at various calibration states.

7. An online protection system for reactor LPD and DNBR protection, comprising:
an acquisition module, which is configured for acquiring periodically updated calibration state data, wherein the calibration state data includes multiple sets of calibration state core parameter data corresponding to multiple different total rod positions of control rods, respectively;
a power reconstruction module, which is configured for reconstructing and calculating the core power distribution data corresponding to total rod position of each control rod based on the calibration state core parameter data corresponding to total rod position of each control rod;
a determination module, which is configured for acquiring the current total rod positions of control rods in real-time, and selecting one set of core power distribution data from multiple sets of core power distribution data as the current core power distribution data based on the current total rod positions of control rods;
a calculation module, which is configured for calculating the LPD maximum value and the DNBR minimum value corresponding to the current total rod positions of control rods based on the current core power distribution data;
a judgment module, which is configured for determining whether to trigger a reactor shutdown signal based on the calculated LPD maximum value and DNBR minimum value, and preset LPD setting value and DNBR setting value.

8. The online protection system based on claim 7, **characterized in that** the determination module, which is configured for subtracting the multiple total rod positions of control rods in the calibration state data from the current total rod positions of control rods respectively, and selecting the set of core power distribution data corresponding to the total rod position of control rod with the smallest positive difference as the current core power distribution data.

9. The online protection system based on claim 7, **characterized in that** the judgment module comprises:
a first judgment subunit, which is configured for determining whether the calculated LPD maximum value is greater than the preset LPD setting value;
a second judgment subunit, which is configured for determining whether the calculated DNBR minimum value is less than the preset DNBR setting value;
a shutdown triggering unit, which is configured for triggering a reactor shutdown signal when the LPD maximum value is greater than the LPD setting value or the DNBR minimum value is less than the DNBR setting value.

10. The online protection system based on claim 7, **characterized in that** the acquisition module, which is configured for acquiring calibration state data by periodically performing three-dimensional simulations or experiments of the reactor at various calibration states.
